# EUROPÄISCHE PATENTANMELDUNG

(11) **EP 4 804 644 A1**
(43) Veröffentlichungstag der Anmeldung: **09.09.2026**
(21) Anmeldenummer: 25162312.0
(22) Anmeldetag: 07.03.2025
(51) Int. Cl.: H04W 52/02

(54) **BESTIMMUNG EINES ERHÖHTEN ENERGIEVERBRAUCHS AUFGRUND ELEKTROMAGNETISCHER STÖRUNGEN**

(71) Anmelder: ise Individuelle Software und Elektronik GmbH, 26122 Oldenburg (DE)
(72) Erfinder: Klein, Torben, 27798 Hude (Oldenburg) (DE); Marks, Henrik, 28870 Ottersberg (DE)
(74) Vertreter: Angerhausen, Christoph

(57) **Zusammenfassung**

Die Erfindung betrifft ein mobiles Gerät, umfassend eine Funkschnittstelle, wobei das mobile Gerät eingerichtet ist, mittels der Funkschnittstelle fortwährend eine Prüfung auf Vorliegen elektromagnetischer Wellen durchzuführen und die folgenden Schritte auszuführen:
Eintreten in einen oder Verbleiben in einem Energiesparzustand, wenn bei der Prüfung keine elektromagnetischen Wellen erfasst wurden; und
wenn bei der Prüfung elektromagnetische Wellen erfasst wurden:
- Verlassen des Energiesparzustands oder Verbleiben in einem Nicht-Energiesparzustand;
Speichern einer ersten Information;
- Bestimmen, ob die elektromagnetischen Wellen eine Datensendung umfassen, die an das mobile Gerät oder an ein Netzwerk, zu dem das mobile Gerät gehört, gerichtet ist; und
- Speichern einer zweiten Information, falls die elektromagnetischen Wellen keine solche Datensendung umfassen;

wobei das mobile Gerät ferner eingerichtet ist, eine Benachrichtigung zu erzeugen, wenn ein Verhältnis aus bislang gespeicherten ersten und zweiten Informationen einen Schwellwert erreicht.

## Beschreibung

### TECHNISCHES GEBIET

Die hier offenbarte Erfindung liegt auf dem technischen Gebiet netzwerkfähiger Geräte und deren Energieverbrauch.

### HINTERGRUND

Im Stand der Technik ist bekannt, netzwerkfähige Geräte bei ausbleibendem Datenverkehr in einen Stromsparmodus zu versetzen, um Strom zu sparen. Dies gilt sowohl für drahtgebundene als auch drahtlos kommunizierende Geräte und sowohl für netz- als auch batteriebetriebene Geräte. Wurde ein Gerät in den Stromsparmodus versetzt, sind Maßnahmen zu ergreifen, um das Gerät wieder in einen Betriebsmodus zu versetzen ("Aufwecken"), sobald Daten eintreffen. Beispielsweise kann das Gerät so programmiert werden, dass es in regelmäßigen Abständen erwacht und prüft, ob Daten übertragen werden. Eine solche Prüfung wird üblicherweise durch eine Netzwerkschnittstelle des Geräts vorgenommen, damit andere Komponenten des Geräts zumindest vorläufig in dem Stromsparmodus verbleiben können.

### ZUSAMMENFASSUNG

Ausführungsformen der hier offenbarten Erfindung umfassen ein mobiles Gerät, umfassend eine Funkschnittstelle, wobei das mobile Gerät eingerichtet ist, mittels der Funkschnittstelle fortwährend eine Prüfung auf Vorliegen elektromagnetischer Wellen durchzuführen und die folgenden Schritte auszuführen: Eintreten oder Verbleiben in einem Energiesparzustand, wenn bei der Prüfung keine elektromagnetischen Wellen erfasst wurden; und wenn bei der Prüfung elektromagnetische Wellen erfasst wurden: Verlassen des Energiesparzustands oder Verbleiben in einem Nicht-Energiesparzustand; Speichern einer ersten Information; Bestimmen, ob die elektromagnetischen Wellen eine Datensendung umfassen, die an das mobile Gerät oder an ein Netzwerk, zu dem das mobile Gerät gehört, gerichtet ist; Speichern einer zweiten Information, falls die elektromagnetischen Wellen keine solche Datensendung umfassen; wobei das mobile Gerät ferner eingerichtet ist, eine Benachrichtigung zu erzeugen, wenn ein Verhältnis aus bislang gespeicherten ersten und zweiten Informationen einen Schwellwert erreicht.

Ausführungsformen der Erfindung umfassen außerdem ein computerimplementiertes Verfahren, umfassend: Mittels einer Funkschnittstelle eines mobilen Gerätes fortwährend prüfen, ob elektromagnetische Wellen vorliegen; Eintreten oder Verbleiben in einem Energiesparzustand, wenn bei der Prüfung keine elektromagnetischen Wellen erfasst wurden; und wenn bei der Prüfung elektromagnetische Wellen erfasst wurden: Verlassen des Energiesparzustands oder Verbleiben in einem Nicht-Energiesparzustand; Speichern einer ersten Information; Bestimmen, ob die elektromagnetischen Wellen eine Datensendung umfassen, die an das mobile Gerät oder an ein Netzwerk, zu dem das mobile Gerät gehört, gerichtet ist; und Speichern einer zweiten Information, falls die elektromagnetischen Wellen keine solche Datensendung umfassen; wobei eine Benachrichtigung erzeugt wird, wenn ein Verhältnis aus bislang gespeicherten ersten und zweiten Informationen einen Schwellwert erreicht.

Ausführungsformen der Erfindung umfassen ferner ein computerlesbares Medium mit darauf gespeicherten Befehlen, die, wenn sie durch einen Prozessor ausgeführt werden, eines der hier offenbarten Verfahren ausführen.

### KURZE BESCHREIBUNG DER ZEICHNUNGEN

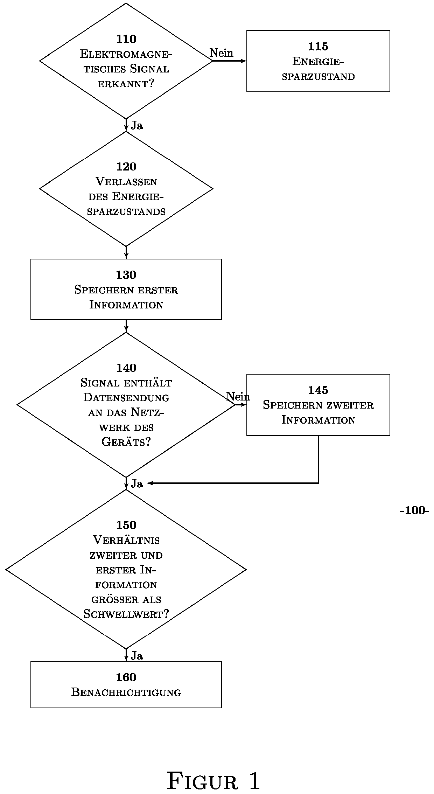

Figur 1 zeigt ein erfindungsgemäßes Verfahren.

### AUSFÜHRLICHE BESCHREIBUNG

Das der Erfindung zugrundeliegende Gerät kommuniziert vorzugsweise über Funk und weist zu diesem Zweck eine Funkschnittstelle mit einer Antenne auf. Das Gerät ist ferner vorzugsweise batteriebetrieben und enthält daher eine Batterie. Das Gerät ist eingerichtet, das im Folgenden beschriebene Verfahren 100 auszuführen.

Figur 1 zeigt ein Verfahren 100 zum Steuern des Energiemodus und zur Überwachung von elektromagnetischen Wellen und Signalen in der Umgebung eines Geräts. Das Gerät prüft in Schritt 110 fortwährend, also beispielsweise in regelmäßigen oder benutzerdefinierten Abständen, ob elektromagnetische Wellen existieren. Diese Prüfung findet unabhängig von einem Modus des Geräts statt und wird vorzugsweise durch eine Funkschnittstelle oder sonstige Netzwerkeinrichtung des Geräts vorgenommen. Die Erfindung ist vorzugsweise auf einen Funkbetrieb des Geräts ausgelegt, kann aber grundsätzlich auch auf drahtgebundene Netzwerkverbindungen angewendet werden. Bei drahtgebundenen Netzwerken kann anstelle von elektromagnetischen Wellen geprüft werden, ob auf einer lokalen Verbindung ein elektrisches Signal anliegt.

Erkennt das Gerät beziehungsweise die entsprechende Schnittstelle in Schritt 110 keinerlei Welle oder Signal, belässt es das Gerät in Schritt 115 in seinem derzeitigen Energiezustand oder versetzt es in einen solchen Zustand. Das Versetzen in einen Energiezustand kann unter der Bedingung erfolgen, dass seit dem letztmaligen Erhalt eines Signals ein vorbestimmter Zeitraum vergangen ist. Das Versetzen kann umfassen, Energieversorgungen des Geräts oder seiner Komponenten abzuschalten.

Erkennt die Schnittstelle in Schritt 110 hingegen eine elektromagnetische Welle, veranlasst sie das Gerät, seinen Energiesparmodus zu verlassen, sofern das Gerät sich in diesem Modus befindet. Zu diesem Zweck kann die Schnittstelle ein entsprechendes Signal an weitere Komponenten des Geräts senden, um diese zu wecken. Beispielsweise können Energieversorgungen des Geräts oder der Komponenten eingeschaltet werden.

In Schritt 130 speichert die Schnittstelle oder das Gerät eine erste Information als Hinweis auf das Erkennen des Signals oder der Welle. Schritt 130 kann unabhängig davon erfolgen, ob das Gerät aufgrund des Signals oder Welle tatsächlich einen Energiesparmodus verlassen musste oder nicht. Alternativ wird Schritt 130 nur dann ausgeführt, wenn sich das Gerät tatsächlich in einem Energiesparmodus befand und diesen verlassen musste.

Das Speichern der ersten Information umfasst im einfachsten Fall das Inkrementieren eines ersten Zählers, also einer Variablen, die zählt, wie oft in Schritt 110 ein Signal oder eine Welle erkannt oder wie oft das Gerät wegen Schritt 120 einen Energiesparmodus verlassen musste. Alternativ oder zusätzlich zu dem Inkrementieren kann Schritt 130 umfassen, aktuelle Zeitstempel zu speichern. Neue Zeitstempel können beispielsweise einer Liste angehängt werden, deren Länge angibt, wie oft ein Signal oder eine Welle erkannt wurde oder wie oft das Gerät einen Energiesparmodus verlassen musste.

In Schritt 140 prüft das Gerät, ob die Welle oder das Signal eine Datensendung umfasst, die an das Netzwerk, in dem sich das Gerät befindet, adressiert ist. Dieser Schritt wird unter Zuhilfenahme bekannter Techniken der Signalverarbeitung durchgeführt, beispielsweise Filterung, Verstärkung, Wandlung und Dekodierung des Signals sowie einer Überprüfung auf Dateninhalte, insbesondere einer Analyse von Präambel und Header und letztlich Adressierung der Daten. Wenn die Datensendung keine Zieladresse des Netzwerks enthält, in dem sich das Gerät befindet, speichert das Gerät in Schritt 145 eine zweite Information als Hinweis darauf, dass die Erkennung in Schritt 110 beziehungsweise das Verlassen des Energiesparmodus' in Schritt 120 wohl unbegründet erfolgte. Die Zieladresse kann eine allgemeine Adresse des Netzwerks oder eine Adresse eines anderen Geräts in diesem Netzwerk oder eine Adresse des Geräts sein. Schritt 145 wird analog zu Schritt 130 ausgeführt und kann Inkrementieren einer zweiten Zählvariable und/oder Speichern von Zeitstempeln in der ersten Liste oder in einer zweiten Liste umfassen. Das Gerät kann im Anschluss in einen Energiesparmodus eintreten, beispielsweise unter den oben zu Schritt 115 erläuterten Bedingungen.

Wenn in Schritt 140 festgestellt wird, dass die Datensendung an das Gerät oder sein Netzwerk adressiert ist, also beispielsweise an eine eindeutige Adresse des Geräts oder eine Gruppenadresse oder eine Adresse eines Netzwerks, in dem sich das Gerät befindet, prüft das Verfahren in Schritt 150 ein Verhältnis aus erster und zweiter Information. In einer ersten Ausführungsform wird aus den Werten W1 (erster Zähler) und W2 (zweiter Zähler) das Verhältnis $\frac{W 2}{W 1}$ ermittelt. Der Wertebereich dieses Verhältnisses liegt zwischen Null (keinerlei "unbegründetes" Erkennen von Signal oder Welle beziehungsweise keinerlei unbegründetes Erwachen aus Energiesparmodus) und Eins (sämtliche Erkennungen oder Erwachungen waren unbegründet). Der jeweilige Ergebniswert wird mit einem vorbestimmten Schwellwert verglichen, der in dem genannten Wertebereich liegt. Übersteigt das Ergebnis den Schwellwert, sendet das Gerät in Schritt 160 eine Benachrichtigung, beispielsweise an einen Benutzer des Geräts, einen Administrator des Netzwerks oder an ein vorbestimmtes anderes Gerät.

Alternativ zu dem oben erläuterten Verhältnis der Zählerwerte kann in Schritt 150 die Differenz der beiden Werte gebildet und mit einem Schwellwert verglichen werden.

Im Anschluss an Schritt 150 kann das Gerät optional prüfen, ob die Zieladresse an das Gerät oder an ein anderes Gerät in dem Netzwerk gerichtet ist. Im ersten Fall würde das Gerät die Datensendung verarbeiten, im zweiten Fall würde das Gerät wieder in den Energiesparmodus eintreten.

Als weitere Alternative kann das Gerät eine Warteschlange (Queue) unterhalten, in die die erste Information und die zweite Information geschrieben wird. Die Informationen umfassen beispielsweise Zeitstempel, die in Schritt 130 beziehungsweise Schritt 145 geschrieben werden. In einer Ausführungsform erfolgt sowohl Schritt 130 als auch Schritt 145 erst infolge der Prüfung in Schritt 140, so dass die erste Information die "begründeten" und die zweite Information die "unbegründeten" Erwachungen protokolliert. Die ersten und zweiten Informationen sind jeweils als solche gekennzeichnet, beispielsweise durch ein jeweiliges Bit oder dadurch, dass bei jedem Schreibvorgang (Schritt 130 oder Schritt 145) eine Datenstruktur bestehend aus zwei Feldern geschrieben wird, von denen ein erstes Feld erste Information und ein zweites Feld zweite Information speichert und jeder der genannten Schritte eine neue solche Datenstruktur erzeugt, in der nur das jeweilige Feld beschrieben wird, etwa mit dem besagten Zeitstempel. Die Warteschlange kann eine vorgegebene feste Länge haben. Jedes Mal, wenn ein neuer Eintrag (Zeitstempel/Datenstruktur) in die Warteschlange geschrieben wird, wird ein ältester Eintrag aus der Warteschlange entfernt, sofern die Warteschlange bereits ihre vorgegebene Länge erreicht hat. Die Warteschlange kann in Schritt 150 analysiert werden, indem das Verhältnis $\frac{A 2}{A 1 + A 2}$ gebildet wird, wobei A1 die Anzahl der ersten Informationen und A2 die Anzahl der zweiten Informationen in der Warteschlange umfasst. Der Wertebereich dieses Verhältnisses liegt zwischen Null und Eins, und das Verhältnis wird in Schritt 150 wiederum mit einem vorgegebenen Schwellwert zwischen Null und Eins verglichen. Alternativ kann lediglich das Verhältnis $\frac{A 2}{N}$ (N: Anzahl der Einträge in der Warteschlange) ermittelt werden, das den gleichen Wertebereich aufweist. Die Verwendung einer Warteschlange bietet den Vorteil, dass die Anzahl gespeicherter Informationen auf eine vorbestimmte Gesamtzahl, nämlich die Länge der Warteschlange, beschränkt bleibt. Darüber hinaus kann der Warteschlange die zusätzliche Information entnommen werden, in welcher Abfolge erste und zweite Informationen gespeichert werden. Insbesondere können Techniken der Mustererkennung angewendet werden, um aus den in der Warteschlange gespeicherten Bits, den Datenstrukturen und/oder den Zeitstempeln Gesetzmäßigkeiten (Muster) zu erkennen, nach denen erste und zweite Informationen gespeichert werden. In einem Beispiel kann untersucht werden, ob erste beziehungsweise zweite Informationen vorwiegend zu bestimmten Uhrzeiten oder Tageszeiten gespeichert werden. Dies kann einen Hinweis darauf darstellen, dass zu bestimmten Zeiten regelmäßig Interferenzen auftreten, die zu einem unbegründeten Erwachen des Geräts führen. In einem zweiten Beispiel kann die Anzahl aufeinanderfolgender gespeicherter Informationen gleichen Typs (erste oder zweite Information) ermittelt und Häufungen bestimmt werden.

Derartige Hinweise können in der Benachrichtigung in Schritt 160 enthalten sein und den Empfänger bei der Behebung der Interferenzen unterstützen. In einer Ausführungsform wird Schritt 160 erst dann ausgeführt, wenn - neben der Bedingung aus Schritt 150 - die Warteschlange erstmals ihre vorgegebene Länge erreicht.

In einer weiteren Ausführungsform umfasst Schritt 130 das Speichern erster und zweiter Informationen in einer Liste, wobei mit jeder Information ein erster beziehungsweise zweiter Wert gespeichert wird, der die jeweilige Information als solche kennzeichnet. Der erste und zweite Wert kann beispielsweise ein Bit umfassen. Die Informationen selbst umfassen vorzugsweise einen Zeitstempel. Schritt 150 kann umfassen, das Verhältnis $\frac{I 2}{I 1}$ zu ermitteln, wobei I1 eine Anzahl der ersten Werte und I2 eine Anzahl der zweiten Werte in der Liste umfasst. Das Verhältnis kann in einem Beispiel anhand der zuletzt gespeicherten I2+I1=N Werte ermittelt werden, um eine Verzerrung durch ältere Werte zu vermeiden.

In einer Ausführungsform kann der Schwellwert automatisch bestimmt werden, indem aus den oben erläuterten Verhältnissen, insbesondere aus einer vorgegebenen Anzahl zuletzt ermittelter Verhältnisse, ein Mittelwert gebildet wird und der Schwellwert aus der Summe des Mittelwerts und einer mittleren Abweichung von dem Mittelwert gebildet wird.

In einer Ausführungsform können neben den ersten und zweiten Informationen dritte Informationen protokolliert werden, die mit den ersten beziehungsweise zweiten Informationen assoziiert, also gemeinsam gespeichert, werden und Ortsinformationen umfassen. Ortsinformationen können beispielsweise eine über GPS ermittelte Position des Geräts umfassen. In Schritt 160 können Benachrichtigungen herausgegeben werden, die alle drei Informationen enthalten und somit einen Rückschluss auf den Ort, an dem eine Interferenz oder andere irrelevante Welle oder ein Signal erkannt wurde, ermöglichen.

In einer Ausführungsform prüft das Verfahren 100, ob ein vorgegebener Zeitraum seit dem Empfangen der letzten Welle oder des letzten Signals abgelaufen ist und veranlasst das Gerät dann, wieder in den Energiesparmodus einzutreten. Dieser Zeitraum kann in einem Beispiel so eingestellt werden, dass er dem mittleren Abstand zwischen allen aufeinanderfolgenden Wellen/Signalen oder dem mittleren Abstand einer Anzahl zuletzt empfangener Wellen/Signale entspricht. Diese Einstellung kann in einer Ausführungsform nach jedem Durchlauf des Verfahrens 100 erfolgen.

In einer Ausführungsform kann das Verfahren beendet werden, wenn einer der hier erläuterten Schwellwerte überschritten wurde, insbesondere um einen vorgegebenen Wert überschritten wurde. Das fortwährende Prüfen auf Wellen/Signale kann somit eingestellt werden, wenn das Gerät überwiegend unbegründet aus einem Energiesparmodus erwachte.

## Patentansprüche

1. Mobiles Gerät, umfassend eine Funkschnittstelle, wobei das mobile Gerät eingerichtet ist, mittels der Funkschnittstelle fortwährend eine Prüfung auf Vorliegen elektromagnetischer Wellen durchzuführen und die folgenden Schritte auszuführen:
Eintreten in einen oder Verbleiben in einem Energiesparzustand, wenn bei der Prüfung keine elektromagnetischen Wellen erfasst wurden; und
wenn bei der Prüfung elektromagnetische Wellen erfasst wurden:
Verlassen des Energiesparzustands oder Verbleiben in einem Nicht-Energiesparzustand;
Speichern einer ersten Information;
Bestimmen, ob die elektromagnetischen Wellen eine Datensendung
umfassen, die an das mobile Gerät oder an ein Netzwerk, zu dem das mobile Gerät gehört, gerichtet ist; und
Speichern einer zweiten Information, falls die elektromagnetischen Wellen keine solche Datensendung umfassen;
wobei das mobile Gerät ferner eingerichtet ist, eine Benachrichtigung zu erzeugen, wenn ein Verhältnis aus bislang gespeicherten ersten und zweiten Informationen einen Schwellwert erreicht.

2. Mobiles Gerät nach Anspruch 1, wobei die Prüfung in regelmäßigen Abständen erfolgt.

3. Mobiles Gerät nach einem der vorstehenden Ansprüche, wobei das Eintreten in einen Energiesparzustand erfolgt, wenn innerhalb einer vorbestimmten Zeitdauer keine elektromagnetischen Wellen erfasst wurden.

4. Mobiles Gerät nach einem der vorstehenden Ansprüche, wobei das Speichern der ersten Information umfasst, eine erste Zählervariable W1 zu inkrementieren, wobei das Speichern der zweiten Information umfasst, eine zweite Zählervariable W2 zu inkrementieren, und wobei das Verhältnis der bislang gespeicherten Informationen W1 und W2 als $\frac{W 2}{W 1}$ ermittelt wird und der Schwellwert zwischen 0 und 1 liegt.

5. Mobiles Gerät nach einem der Ansprüche 1 bis 3, wobei das Speichern der ersten Information unter der Bedingung erfolgt, dass die elektromagnetischen Wellen eine Datensendung an das mobile Gerät oder das Netzwerk umfassen.

6. Mobiles Gerät nach Anspruch 5, wobei das Verhältnis der bislang gespeicherten Informationen als Differenz der ersten und zweiten Informationen ermittelt wird und der Schwellwert eine vorbestimmte Anzahl umfasst.

7. Mobiles Gerät nach Anspruch 5, ferner umfassend eine Warteschlange, wobei das Speichern der ersten Information umfasst, einen ersten Wert in die Warteschlange einzufügen, und das Speichern der zweiten Informationen umfasst, einen zweiten Wert in die Warteschlange einzufügen, wobei mit jedem Einfügen ein ältester Eintrag aus der Warteschlange entfernt wird, wobei das Verhältnis der bislang gespeicherten ersten und zweiten Informationen als $\frac{A 2}{A 1 + A 2}$ oder $\frac{A 2}{N}$ ermittelt wird, wobei A1 die Anzahl der ersten Werte in der Warteschlange, A2 die Anzahl der zweiten Werte in der Warteschlange und N die Länge der Warteschlage ist, und wobei der Schwellwert zwischen 0 und 1 liegt.

8. Mobiles Gerät nach Anspruch 7, wobei das Benachrichtigen frühestens dann erfolgt, wenn wenigstens N-mal in die Warteschlange geschrieben wurde.

9. Mobiles Gerät nach Anspruch 5, ferner umfassend eine Liste, wobei das Speichern der ersten Information das Speichern eines Zeitstempels und eines ersten Wertes in der Liste und das Speichern der zweiten Information das Speichern eines Zeitstempels und eines zweiten Wertes in der Liste umfasst, wobei das Verhältnis der bislang gespeicherten Informationen als $\frac{I 2}{I 1}$ ermittelt wird, wobei I1+I2=N eine vorbestimmte Anzahl der zuletzt gespeicherten Einträge der Liste ist, wobei I1 eine Anzahl der ersten Werte und I2 eine Anzahl der zweiten Werte in der Liste ist.

10. Computerimplementiertes Verfahren, umfassend:
Mittels einer Funkschnittstelle eines mobilen Gerätes fortwährend prüfen, ob elektromagnetische Wellen vorliegen;
Eintreten oder Verbleiben in einem Energiesparzustand, wenn bei der Prüfung keine elektromagnetischen Wellen erfasst wurden; und
wenn bei der Prüfung elektromagnetische Wellen erfasst wurden:
Verlassen des Energiesparzustands oder Verbleiben in einem Nicht-Energiesparzustand;
Speichern einer ersten Information;
Bestimmen, ob die elektromagnetischen Wellen eine Datensendung umfassen, die an das mobile Gerät oder an ein Netzwerk, zu dem das mobile Gerät gehört, gerichtet ist; und
Speichern einer zweiten Information, falls die elektromagnetischen Wellen keine solche Datensendung umfassen;
wobei eine Benachrichtigung erzeugt wird, wenn ein Verhältnis aus bislang gespeicherten ersten und zweiten Informationen einen Schwellwert erreicht.

11. Computerimplementiertes Verfahren nach Anspruch 10, wobei die Prüfung in regelmäßigen Abständen erfolgt.

12. Computerimplementiertes Verfahren nach Anspruch 10 oder 11, wobei das Eintreten in einen Energiesparzustand erfolgt, wenn innerhalb einer vorbestimmten Zeitdauer keine elektromagnetischen Wellen erfasst wurden.

13. Computerimplementiertes Verfahren nach einem der vorstehenden Ansprüche, wobei das Speichern der ersten Information unter der Bedingung erfolgt, dass die elektromagnetischen Wellen eine Datensendung an das mobile Gerät oder das Netzwerk darstellen.

14. Computerprogrammprodukt, umfassend Befehle, die, wenn sie durch einen Prozessor ausgeführt werden, dass Verfahren nach einem der Ansprüche 10 bis 13 ausführen.

15. Computerlesbares Medium mit darauf gespeicherten Befehlen, die, wenn sie durch einen Prozessor ausgeführt werden, dass Verfahren nach einem der Ansprüche 10 bis 13 ausführen.

## Geänderte Patentansprüche

### Geänderte Patentansprüche gemäss Regel 137(2) EPÜ.

1. Mobiles Gerät, umfassend eine Funkschnittstelle, wobei das mobile Gerät eingerichtet ist, mittels der Funkschnittstelle in regelmäßigen oder benutzerdefinierten Abständen eine Prüfung auf Vorliegen elektromagnetischer Wellen durchzuführen (110) und die folgenden Schritte auszuführen:
Eintreten (115) in einen oder Verbleiben in einem Energiesparzustand, wenn bei der Prüfung keine elektromagnetischen Wellen erfasst wurden; und
wenn bei der Prüfung elektromagnetische Wellen erfasst wurden:
Verlassen (120) des Energiesparzustands oder Verbleiben in einem Nicht-Energiesparzustand;
Speichern (130) einer ersten Information;
Bestimmen (140), ob die elektromagnetischen Wellen eine Datensendung umfassen, die an das mobile Gerät oder an ein Netzwerk, zu dem das mobile Gerät gehört, gerichtet ist; und
Speichern (145) einer zweiten Information, falls die elektromagnetischen Wellen keine solche Datensendung umfassen;
wobei das mobile Gerät ferner eingerichtet ist, eine Benachrichtigung zu erzeugen (160), wenn ein Verhältnis aus bislang gespeicherten ersten und zweiten Informationen einen Schwellwert erreicht (150),
wobei das Speichern (130) der ersten Information umfasst, eine erste Zählervariable W1 zu inkrementieren, wobei das Speichern (145) der zweiten Information umfasst, eine zweite Zählervariable W2 zu inkrementieren, und wobei das Verhältnis der bislang gespeicherten Informationen W1 und W2 als $\frac{W 2}{W 1}$ ermittelt wird und der Schwellwert zwischen 0 und 1 liegt.

2. Mobiles Gerät nach einem der vorstehenden Ansprüche, wobei das Eintreten (115) in einen Energiesparzustand erfolgt, wenn innerhalb einer vorbestimmten Zeitdauer keine elektromagnetischen Wellen erfasst wurden.

3. Mobiles Gerät nach Anspruch 1 oder 2, wobei das Speichern (130) der ersten Information unter der Bedingung erfolgt, dass die elektromagnetischen Wellen eine Datensendung an das mobile Gerät oder das Netzwerk umfassen.

4. Mobiles Gerät nach Anspruch 3, ferner umfassend eine Warteschlange, wobei das Speichern (130) der ersten Information umfasst, einen ersten Wert in die Warteschlange einzufügen, und das Speichern (145) der zweiten Informationen umfasst, einen zweiten Wert in die Warteschlange einzufügen, wobei mit jedem Einfügen ein ältester Eintrag aus der Warteschlange entfernt wird, wobei das Verhältnis der bislang gespeicherten ersten und zweiten Informationen als $\frac{A 2}{A 1 + A 2}$ oder $\frac{A 2}{N}$ ermittelt wird, wobei A1 die Anzahl der ersten Werte in der Warteschlange, A2 die Anzahl der zweiten Werte in der Warteschlange und N die Länge der Warteschlage ist, und wobei der Schwellwert zwischen 0 und 1 liegt.

5. Mobiles Gerät nach Anspruch 4, wobei das Benachrichtigen (160) frühestens dann erfolgt, wenn wenigstens N-mal in die Warteschlange geschrieben wurde.

6. Mobiles Gerät nach Anspruch 3, ferner umfassend eine Liste, wobei das Speichern (130) der ersten Information das Speichern eines Zeitstempels und eines ersten Wertes in der Liste und das Speichern (145) der zweiten Information das Speichern eines Zeitstempels und eines zweiten Wertes in der Liste umfasst, wobei das Verhältnis der bislang gespeicherten Informationen als $\frac{I 2}{I 1}$ ermittelt wird, wobei I1+I2=N eine vorbestimmte Anzahl der zuletzt gespeicherten Einträge der Liste ist, wobei I1 eine Anzahl der ersten Werte und I2 eine Anzahl der zweiten Werte in der Liste ist.

7. Computerimplementiertes Verfahren, umfassend:
Mittels einer Funkschnittstelle eines mobilen Gerätes in regelmäßigen oder benutzerdefinierten Abständen prüfen (110), ob elektromagnetische Wellen vorliegen;
Eintreten (115) oder Verbleiben in einem Energiesparzustand, wenn bei der Prüfung keine elektromagnetischen Wellen erfasst wurden; und
wenn bei der Prüfung elektromagnetische Wellen erfasst wurden:
Verlassen (120) des Energiesparzustands oder Verbleiben in einem Nicht-Energiesparzustand;
Speichern (130) einer ersten Information;
Bestimmen (140), ob die elektromagnetischen Wellen eine Datensendung umfassen, die an das mobile Gerät oder an ein Netzwerk, zu dem das mobile Gerät gehört, gerichtet ist; und
Speichern (145) einer zweiten Information, falls die elektromagnetischen Wellen keine solche Datensendung umfassen;
wobei eine Benachrichtigung erzeugt wird (160), wenn ein Verhältnis aus bislang gespeicherten ersten und zweiten Informationen einen Schwellwert erreicht,
wobei das Speichern (130) der ersten Information umfasst, eine erste Zählervariable W1 zu inkrementieren, wobei das Speichern (145) der zweiten Information umfasst, eine zweite Zählervariable W2 zu inkrementieren, und wobei das Verhältnis der bislang gespeicherten Informationen W1 und W2 als $\frac{W 2}{W 1}$ ermittelt wird und der Schwellwert zwischen 0 und 1 liegt.

8. Computerimplementiertes Verfahren nach Anspruch 7, wobei das Eintreten (115) in einen Energiesparzustand erfolgt, wenn innerhalb einer vorbestimmten Zeitdauer keine elektromagnetischen Wellen erfasst wurden.

9. Computerimplementiertes Verfahren nach einem der vorstehenden Ansprüche, wobei das Speichern (130) der ersten Information unter der Bedingung erfolgt, dass die elektromagnetischen Wellen eine Datensendung an das mobile Gerät oder das Netzwerk darstellen.

10. Computerprogrammprodukt, umfassend Befehle, die, wenn sie durch einen Prozessor ausgeführt werden, dass Verfahren nach einem der Ansprüche 7 bis 9 ausführen.

11. Computerlesbares Medium mit darauf gespeicherten Befehlen, die, wenn sie durch einen Prozessor ausgeführt werden, dass Verfahren nach einem der Ansprüche 7 bis 9 ausführen.
